# EUROPÄISCHE PATENTSCHRIFT

(11) **EP 0 822 745 B1**
(45) Veröffentlichungstag und Bekanntmachung des Hinweises auf die Patenterteilung: **31.07.2002**
(21) Anmeldenummer: 96913493.1
(22) Anmeldetag: 09.04.1996
(51) Int. Cl.: A01N 43/88

(54) **SCHÄDLINGSBEKÄMPFUNGSMITTEL**
PESTICIDE
PESTICIDE

(30) Priorität: 22.04.1995 DE 19514903
(43) Veröffentlichungstag der Anmeldung: 11.02.1998
(73) Patentinhaber: BASF AKTIENGESELLSCHAFT, 67056 Ludwigshafen (DE)
(72) Erfinder: HOFMEISTER, Peter, D-67434 Neustadt (DE); NEUMANN, Ulrich, D-67105 Schifferstadt (DE); HARRIES, Volker, D-67227 Frankenthal (DE); VON DER HEYDE, Jürgen, D-64673 Zwingenberg (DE); SCHROEDER, Manfred, D-67434 Neustadt (DE); TIDOW, Jörn, D-68723 Schwetzingen (DE); BRATZ, Matthias, D-67117 Limburgerhof (DE); JÄGER, Karl-Friedrich, D-67117 Limburgerhof (DE)
(86) Internationale Anmeldenummer: EP9601513
(87) Internationale Veröffentlichungsnummer: WO9633613

(56) Entgegenhaltungen:
- DD-A- 233 780
- US-A- 2 838 389
- US-A- 3 265 561
- AGRONOMIA COLOMBIANA, Bd. 8, Nr. 2, 1991, Seiten 248-252, XP002013672 A. MARROQUIN & G. ARBELAEZ: "Control quimico del nematodo quiste Heterodera trifolii en clavel miniatura."
- DATABASE WPI Section Ch, Derwent Publications Ltd., London, GB; Class C02, AN 73-70615U XP002013673 & JP,B,48 038 139 (MITSUBISHI GAS CHEMICAL I)
- DATABASE WPI Section Ch, Week 8346 Derwent Publications Ltd., London, GB; Class C01, AN 83-817495 XP002013674 & JP,A,58 170 706 (SUMITOMO CHEMICAL KK) , 7.Oktober 1983

## Beschreibung

Die vorliegende Erfindung betrifft ein Schädlingsbekämpfungsmittel, welches eine Wirkstoffkombination bestehend aus
a) Tetrahydro-3,5-dimethyl-1,3,5-thiadiazin-2-thion der Formel 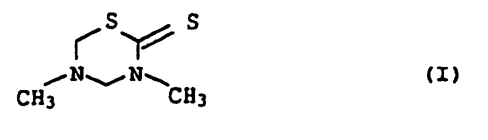 und
b) O-(O-Ethyl-S-n-propylphosphoryl)-O-(N-methylcarbamoyl)-brenzcatechin der Formel 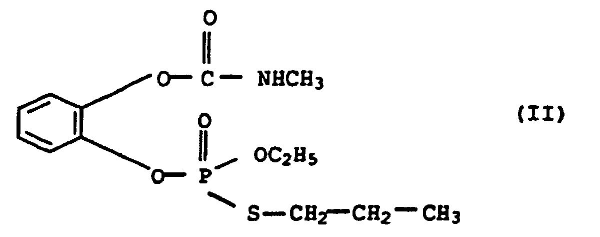 und/oder
c) O-Ethyl-S,S-dipropylphosphorodithioat der Formel 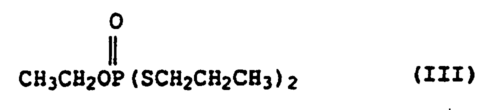 und/oder
d) (RS)-S-sec-butyl-O-ethyl-2-oxo-1,3-thiazolidin-3-ylphosphonothioat der Formel 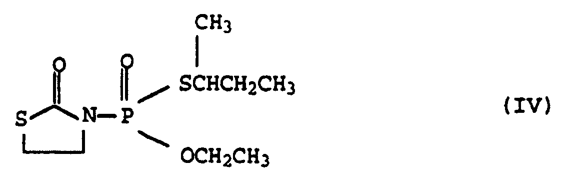 und/oder
e) S-tert-butylthiomethyl-O,O-diethyl-phosphorodithioat der Formel 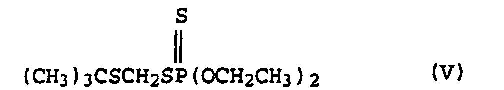 und/oder
f) S,S-di-sec-butyl-O-ethyl-phosphorodithioat der Formel 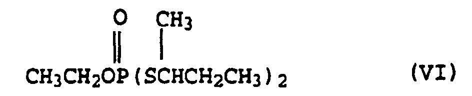 und/oder
g) (RS)-[0-1-(4-chlorophenyl)pyrazol-4-yl]-O-ethyl-S-propylphosphorothioat der Formel 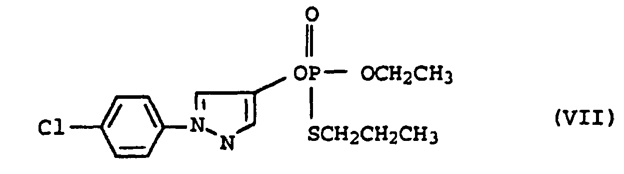 in einer synergistisch wirksamen Menge enthält.

Außerdem betrifft die Erfindung Verfahren zur Bekämpfung von Schädlingen sowie die Verwendung der Verbindung I und einer oder mehrerer der Verbindungen II bis VII zur Herstellung derartiger Schädlingsbekämpfungsmittel.

Die Verbindung der Formel I (Common Name Dazomet), ihre Berstellung und ihre Wirkung gegen Schädlinge ist aus der Literatur bekannt (US-A-2,838,389; WO 93/13085). Ebenfalls sind die Verbindungen der Formeln II bis VII, deren Herstellung und deren Wirkung gegen Schädlinge bekannt:
Verbindung II (EP-B-0309843);
Verbindung III, Common Name Ethoprophos, (US-A-3 112 244; 3 268 393);
Verbindung IV, Common Name Fosthiazate, (The Pesticide Manual, 9th Edition, Nr. 6805);
Verbindung V, Common Name Terbufos, (The Pesticide Manual, 9th Edition, Nr. 11300);
Verbindung VI, Common Name Cadusafos, (The Pesticide Manual, 9th Edition, Nr. 1835):
Verbindung VII Common Name Pyraclofos, (The Pesticide Manual, 9th Edition, Nr. 10 335).

Im Hinblick auf eine Senkung der Aufwandmengen und eine Verbesserung des Wirkungsspektrums der bekannten Verbindungen lagen der vorliegenden Erfindung Mischungen als Aufgabe zugrunde, die bei verringerter Gesamtmenge an ausgebrachten Wirkstoffen eine verbesserte Wirkung gegen Schädlinge aufweisen (synergistische Mischungen). Marroquin und Arbelaez beschreiben die kombiniert Verwendung von Dazomet mit Aldicarb, Carbofuran bzw. Oxamyl zur Kontrolle von Nematoden (Agronomic Colomba, Vol. 8(2), 248-252 (1991)).

Erfindungsgemäß wurden die eingangs definierten Mittel gefunden. Es wurde außerdem gefunden, daß sich bei gleichzeitiger gemeinsamer oder getrennter Anwendung der Verbindung I und einer oder mehrerer der Verbindungen II bis VII oder bei Anwendung der Verbindung I und einer oder mehrerer der Verbindungen II bis VII nacheinander Schädlinge besser bekämpfen lassen als mit den Einzelverbindungen.

Die erfindungsgemäßen Schädlingsbekämpfungsmittel sind geeignet, Schädlinge aus der Klasse der Insekten, Spinnentiere und Nematoden wirksam zu bekämpfen. Sie sind darüber hinaus geeignet, Bodenschadpilze und pflanzenschädigende Bodenbakterien, wie z.B. Agrobacterium tumefaciens, sowie keimende Pflanzen wirksam zu bekämpfen. Sie können im Pflanzenschutz sowie auf dem Hygiene-, und Vorratsschutzsektor als Schädlingsbekämpfungsmittel eingesetzt werden. Vorteilhaft werden sie als Bodenentseuchungsmittel verwendet.

Zu den schädlichen Insekten gehören aus der Ordnung der Schmetterlinge (Lepidoptera) beispielsweise Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholita funebrana, Grapholita molesta, Heliothis armigera, Heliothis virescens, Heliothis zea, Hellula undalis, Hibernia defoliaria, Hyphantria cunea, Hyponomeuta malinellus, Keifferia lycopersicella, Lambdina fiscellaria, Laphygma exigua, Leucoptera coffeella, Leucoptera scitella, Lithocolletis blancardella, Lobesia botrana, Loxostege scitella, Lithocolletis blancardella, Lobesia botrana, Loxostege sticticalis, Lymantria dispar, Lymantria monacha, Lyonetia clerkella Malacosoma neustria, Mamestra brassicae, Orgyia pseudotsugata, Ostrinia nubilalis, Panolis flamea, Pectinophora gossypiella, Peridroma saucia, Phalera bucephala, Phthorimaea operculella, Phyllocnistis citrella, Pieris brassicae, Plathypena scarbra, Plutella xylostella, Pseudoplusia includens, Phyacionia frustrana, Scrobipalpula absoluta, Sitotroga cerelella, Sparganothis pilleriana, Spodoptera frugiperda, Spodoptera littoralis, Spodoptera litura, Thaumatopoea pityocampa, Tortrix viridana, Trichoplusia ni, Zeiraphera canadensis.

Aus der Ordnung der Käfer (Coleoptera) beispielsweise Agrilus sinuatus, Agriotes lineatus, Agriotes obscurus, Amphimallus solstitialis, Anisandrus dispar, Anthonomus grandis, Anthonomus pomorum, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Ceuthorrhynchus assimilis, Ceuthorrynchus napi, Chaetocnema tibialis, Conoderus vespertinus, Crioceris asparagi, Diabrotica longicornis, Diabrotica 12-punctata, Diabrotica virgifera, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Onlema oryzae, Ortiorrhynchus sulcatus, Ortiorrhynchus ovatus, Phaedon cochlearia, Phyllotreta chrysocephala, Phyllophaga sp., Phyllopertha horticola, Phyllotreta nemorum, Phyllotreta striolata, Popillia japonica, Sitona lineatus, Sitophilus granaria.

Aus der Ordnung der Zweiflügler (Diptera) beispielsweise Aedes aegypti, Aedes vexans, Anastrepha ludens, Anopheles maculipennis, Ceratitis capitata, Chrysomya bezziana, Chrysomya hominivorax, Chrysomya macellaria, Contarinia sorghicola, Cordylobia anthropophaga, Culex pipiens, Dacus cucurbitae, Dacus oleae, Dasineura brassicae, Fannia canicularis, Gasterophilus intestinalis, Glossia morsitans, Haematobia irritans, Haplodiplosis equestris, Hylemyia platura, Hypoderma lineata, Liriomyza sativae, Liriomyza trifolii, Lucilia caprina, Lucilia cuprina, Lucilia sericata, Lycoria pectoralis, Mayetiola destructor, Musca domestica, Muscina stabulans, Oestrus ovis, Oscinella frit, Pegomya hysocyami, Phorbia antiqua, Phorbia brassicae, Phorbia coarctata, Rhagoletis cerasi, Rhagoletis pomonella, Tabanus bovinus, Tipula oleracea, Tipula paludosa.

Aus der Ordnung der Thripse (Thysanoptera) beispielsweise Frankliniella fusca, Frankliniella occidentalis, Frankliniella tritici, Scirtothrips citri, Thrips oryzae, Thrips palmi, Thrips tabaci.

Aus der Ordnung der Hautflügler (Hymenoptera) beispielsweise Athalia rosae, Atta cephalotes, Atta sexdens, Atta texana, Hoplocampa minuta, Hoplocampa testudinea, Momomorium pharaonis, Solenopsis geminata, Solenopsis invicta.

Aus der Ordnung der Wanzen (Heteroptera) beispielsweise Acrosternum hilare, Blissus leucopterus, Cyrtopeltis notatus, Dysdercus cingulatus, Dysdercus intermedius, Eurygaster integriceps, Euchistus impictiventris, Leptoglossus phyllopus, Lygus lineolaris, Lygus pratensis, Nezara, yiridula, Piesma quadrata, Solubea insularis, Thyanta perditor.

Aus der Ordnung der Pflanzensauger (Homoptera) beispielsweise Perkinsiella saccaricida (Zuckerrohrzikade), Nilaparvata lugens (Braune Zikade), Empoasca fabae (Kartoffelzikade), Psylla mali (Apfelblattsauger), Psylla piri (Birnblattsauger), Trialeurodes vaporariorum (Weiße Fliege), Aphis fabae (Schwarze Bohnenlaus), Aphis pomi (Grüne Apfellaus), Aphis sambuci (Holunderblattlaus), Aphidula nasturtii (Kreuzdornblattlaus), Cerosipha gossypii (Gurkenblattlaus), Sappaphis mali (Rosige Apfellaus), Sappaphis mala (Mehlige Birnblattlaus), Dysaphis radicola (Mehlige Apfelfaltenlaus), Brachycaudus cardui (Große Pflaumenblattlaus), Brevicoryne brassicae (Kohlblattlaus), Phorodon humuli (Hopfenblattlaus), Rhopalomyzus ascalonicus (Zwiebellaus), Myzodes persicae (Grüne Pfirsichlaus), Myzus cerasi (Schwarze Sauerkirschenlaus), Dysaulacorthum pseudosolani (Gefleckte Kartoffellaus), Acyrthosiphon onobrychis (Grüne Erbsenalaus), Macrosiphon rosae (Große Rosenblattlaus), Megoura viciae (Wickenlaus), Schizoneura lanuginosa (Birnenblattlaus), Pemphigus bursarius (Salatwurzellaus), Dreyfusia nordmannianae (Tannentrieblaus), Dreyfusia piceae (Weißtannstammlaus), Adelges Iaricis (Rote Fichtengallenlaus), Viteus vitifolii (Reblaus); aus der Ordnung der Termiten (Isoptera) beispielsweise Reticulitermes lucifugus, Calotermes flavicollis, Leucotermes flavipes, Termes natalensis.

Aus der Ordnung der Geradflügler (Orthoptera) beispielsweise Forficula auricularia, Acheta domestica, Gryllotalpa gryllotalpa, tachycines asynamorus, Locusta migratoria, Stauronotus meroccanus, Schistocerca peregrina, Nomadacris septemfasciata, Melanoplus spretus, Melanoplus femur-rubrum, Blatta orientalis, Blattella germanica, Periplaneta americana, Blabera gigantes.

Zur Klasse der Arachnoidea gehören Spinnentiere (Acarina) beispielsweise Ixodes ficinus, Ornithodorus moubata, Amblyomma americanum, Dermacentor silvarum, Boophilus microplus, Tetranychus telarius, Tetranychus pacificus, Paratetranychus pilosus, Bryobia praetiosa.

Zur Klasse der Nematoden zählen beispielsweise Wurzelgallennematoden, z.B. Meloidogyne hapla, Meloidogyne incognita, Meloidogyne javenica, Zysten bildende Nematoden, z.B. Globodera rostochiensis, Heterodera avenae, Heterodera glycinae, Heterodera schachtii, Heterodera trifolii, Stock- und Blattälchen, z.B. Belonolaimus longicaudatus, Ditylenchus destructor, Ditylenchus dipsaci, Heliocotylenchus multicinctus, Longidorus elongatus, Radopholus similis, Rotylenchus robustus, Trichodorus primitivus, Tylenchlorhynchus claytoni, Tylenchorhynchus dubius, Paratylenchus neglectus, Paratylenchus penetrans, Paratylenchus curvitatus, Paratylenchus goodeyi.

Zu den Schadpilzen zählen Fusarium, Pythium, Rhizoctonia, Sclerotinia, Verticillium spp., Colletotrichum coccodes.

Im allgemeinen enthalten die erfindungsgemäßen Schädlingsbekämpfungsmittel 0,1 bis 99 Gew.-%, vorzugsweise 0,1 bis 98 Gew.-%, insbesondere 0,1 bis 95 Gew.-% der Wirkstoffkombination.

In den Schädlingsbekämpfungsmitteln gemäß der Erfindung beträgt das Gewichtsverhältnis der Verbindung der Formel I zu einer oder mehreren der Verbindungen der Formeln II bis VII im allgemeinen 1000:1 bis 0,1:1, vorzugsweise 500:1 bis 1:1, insbesondere 500:1 bis 10:1.

Die Aufwandmenge an der Wirkstoffkombination beträgt unter Freilandbedingungen im allgemeinen 0,1 bis 1000 kg/ha, vorzugsweise 0,5 bis 500 kg/ha, insbesondere 1 kg bis 300 kg/ha.

Vorzugsweise werden die erfindungsgemäßen Schädlingsbekämpfungsmittel zur Bekämpfung von Bodenschädlingen wie Nematoden, Bodenschadpilzen, Bodeninsekten, pflanzenschädigenden Bodenbakterien sowie von keimenden Pflanzen eingesetzt, wobei sie mit besonderem Vorteil zur Bekämpfung von Nematoden verwendet werden. Dies erfolgt zweckmäßig in der Weise, daß die Schädlingsbekämpfungsmittel als Bodenentseuchungsmittel eingesetzt werden, z.B. indem die Schädlingsbekämpfungsmittel in geeigneter Form, beispielsweise in Form von Granulaten, möglichst gleichmäßig auf die Bodenoberfläche der zu behandelnden Böden ausgebracht wird. Anschließend wird das ausgebrachte Mittel in den Boden eingearbeitet, zweckmäßig in eine Tiefe von 5 bis 40 cm, vorzugsweise 10 bis 30 cm. Die Dauer der Bodenentseuchung bis zur Neubestellung hängt stark von der Bodentemperatur ab und kann zwischen 5 und 45 Tagen liegen, z.B. im Bereich von 12 bis 20 Tagen bei Bodentemperaturen von 12 bis 18°C.

Die Wirkstoffe können als solche, in Form ihrer Formulierungen oder den daraus bereiteten Aufwendungsformen, z.B. in Form von Pulvern, Suspensionen oder Dispersionen, Emulsionen, Pasten, Streumitteln, Granulaten angewendet werden. Die Anwendungsformen richten sich ganz nach den Verwendungszwecken. In der Regel werden die erfindungsgemäßen Schädlingsbekämpfungsmittel in Form von Granulaten angewendet.

Die nachfolgenden Beispiele veranschaulichen die Erfindung.

### Formulierungsbeispiele zur Herstellung von Granulatmischformulierungen

### Formulierungsbeispiel 1

In einem Nautamischer werden 96 Gew.-Teile Tetrahydro-3,5-dimethyl-1,3,5-thiadiazin-2-thion (I) vorgelegt und auf 60°C erwärmt. 1,5 Gew.-Teile 0-(0-Ethyl-S-n-propylphosphoryl)-O-(N-methylcarbamoyl)-brenzcatechin (II) werden geschmolzen und bei einer Temperatur von 65°C im laufenden Mischer auf die Kornoberflächen des vorgelegten Wirkstoffs I aufgesprüht. Nach Beendigung des Aufsprühens werden 0,5 Gew.-Teile eines feinpulverigen Calciumsilikates gleichmäßig in die Mischung eingetragen. Man erhält ein Kombinationsgranulat mit guten Fließeigenschaften.

### Anwendungsbeispiele

In den folgenden Beispielen wurden die erfindungsgemäßen Schädlingsbekämpfungsmittel hinsichtlich ihrer Wirkung auf Wurzelgallennematoden der Gattung Meloidogyne bei getopften Tomaten im Gewächshaus untersucht.

Es wurden untersucht erfindungsgemäße Mischungen von Tetrahydro-3,5-dimethyl-1,3,5-thiadiazin-2-thion (Dazomet) (I) und O-(O-Ethyl-S-n-propylphosphoryl)-O-(N-methylcarbamoyl) -brenzcatechin (II) in den Beispielen 1-3, die mit der Wirkung der Einzelverbindungen I, II und V (Fosthiazate) sowie dem Bodenentseuchungsmittel Dichlorpropen/Dichlorpropan ("D-D"), die in den Vergleichsversuchen V1 bis V5 getestet wurden, sowie mit den unbehandelten Tomatenpflanzen verglichen wurden.

Dabei wurden eingesetzt I als Granulat mit 98 Gew.-% Wirkstoff, II als Formulierung mit 4,2 Gew.-% Wirkstoff, IV als Formulierung mit 1 Gew.-% Wirkstoff und D-D 92 gew.-%ig in öliger Formulierung.

Die Begutachtung erfolgte 74 Tage nach Pflanzung der Tomatenpflanzen.

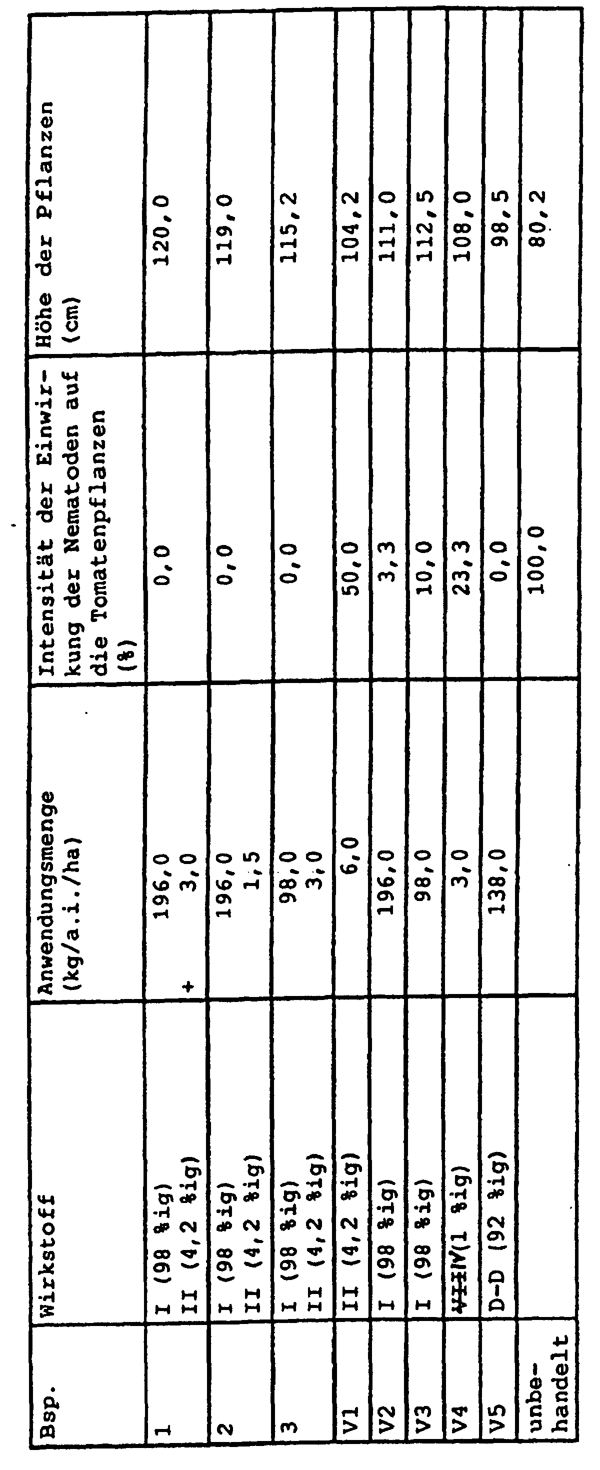

## Patentansprüche

1. Schädlingsbekämpfungsmittel, enthaltend eine Wirkstoffkombination bestehend aus
a) Tetrahydro-3,5-dimethyl-1,3,5-thiadiazin-2-thion der Formel 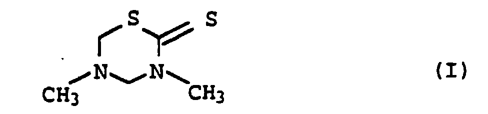 und
b) O-(O-Ethyl-S-n-propylphosphoryl)-O- (N-methylcarbamoyl)-brenzcatechin der Formel 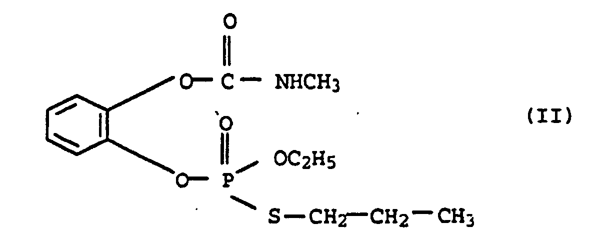 und/oder
c) O-Ethyl-S,S-dipropylphosphorodithioat der Formel 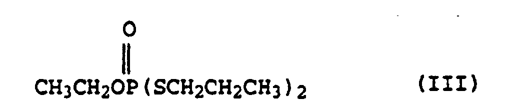 und/oder
d) (RS)-S-sec-butyl-O-ethyl-2-oxo-1,3-thiazolidin-3-ylphosphonothioat der Formel 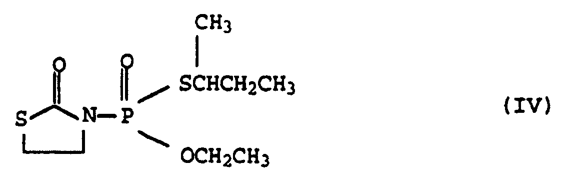 und/oder
e) S-tert-butylthiomethyl-O,O-diethyl-phosphorodithioat der Formel 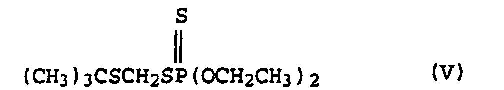 und/oder
f) S,S-di-sec-butyl-O-ethyl-phosphorodithioat der Formel 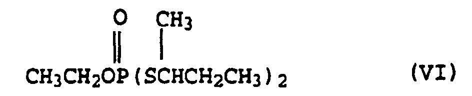 und/oder
g) (RS)-[O-1-(4-chlorophenyl)pyrazol-4-yl]-O-ethyl-S-propylphosphorothioat der Formel 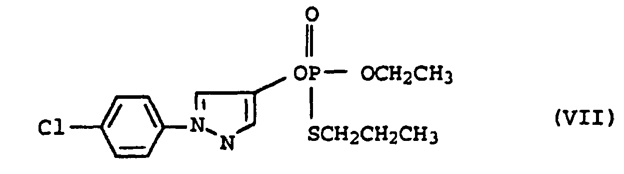 in einer synergistisch wirksamen Menge.

2. Schädlingsbekämpfungsmittel nach Anspruch 1, **dadurch gekennzeichnet, daß** es 0,1 bis 99 Gew.-% Wirkstoffkombination enthält.

3. Schädlingsbekämpfungsmittel nach Anspruch 1, **dadurch gekennzeichnet, daß** das Gewichtsverhältnis der Verbindung der Formel I zu einer oder mehreren der Verbindungen der Formeln II bis VII 1000:1 bis 0,1:1 beträgt.

4. Verfahren zur Bekämpfung von Schädlingen, **dadurch gekennzeichnet, daß** man die Schädlinge und/oder die von Schädlingen freizuhaltenden Flächen und/oder Räume mit einer für Schädlinge wirksamen Menge der Verbindung der Formel I gemäß Anspruch 1 und einer oder mehrerer der Verbindungen der Formeln II bis VII gemäß Anspruch 1 behandelt.

5. Verfahren zur Bodenentseuchung, **dadurch gekennzeichnet, daß** man den Boden mit einer wirksamen Menge der Verbindung der Formel I gemäß Anspruch 1 und einer oder mehrerer der Verbindungen der Formeln II bis VII gemäß Anspruch 1 behandelt.

6. Verfahren zur Bekämpfung von Nematoden, Bodenschadpilzen, Bodeninsekten, pflanzenschädigenden Bodenbakterien und keimenden Pflanzen, **dadurch gekennzeichnet, daß** man den Erdboden mit einer wirksamen Menge der Verbindung der Formel I gemäß Anspruch 1 und einer oder mehrerer der Verbindungen der Formeln II bis VII gemäß Anspruch 1 behandelt.

7. Verwendung der Wirkstoffkombinationen gemäß Anspruch 1 zur Bekämpfung von Schädlingen.

8. Verwendung der Wirkstoffkombination gemäß Anspruch 1 zur Bodenentseuchung.

9. Verwendung der Wirkstoffkombination gemäß Anspruch 1 zur Bekämpfung von Nematoden, Bodenschadpilzen, Bodeninsekten, pflanzenschädigenden Bodenbakterien und keimenden Pflanzen.

10. Verwendung der Verbindung I gemäß Anspruch 1 zur Herstellung von Schädlingsbekämpfungsmitteln gemäß Anspruch 1.

11. Verwendung von einer oder mehrerer der Verbindungen II bis VII zur Herstellung von Schädlingsbekämpfungsmitteln gemäß Anspruch 1.

12. Schädlingsbekämpfungsmittel, enthaltend die Wirkstoffkombination gemäß Anspruch 1 neben üblichen Trägerstoffen.

## Claims

1. A pesticide, comprising an active ingredient combination consisting of
a) tetrahydro-3,5-dimethyl-1,3,5-thiadiazine-2-thione of the formula 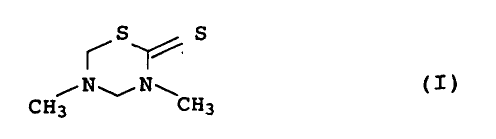 and
b) O-(O-ethyl-S-n-propylphosphoryl)-O-(N-methylcarbamoyl)-pyrocatechol of the formula 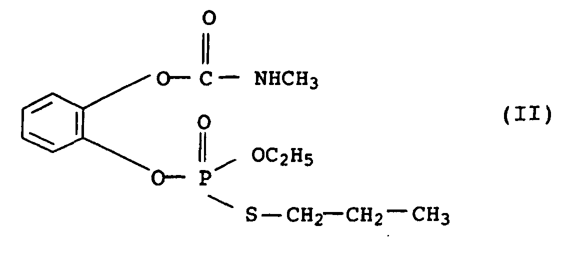 and/or
c) O-ethyl S,S-dipropyl phosphorodithioate of the formula 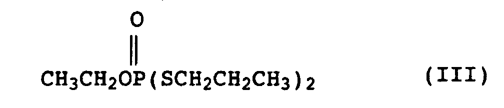 and/or
d) (RS)-S-sec-butyl O-ethyl 2-oxo-1,3-thiazolidin-3-yl-phosphonothioate of the formula 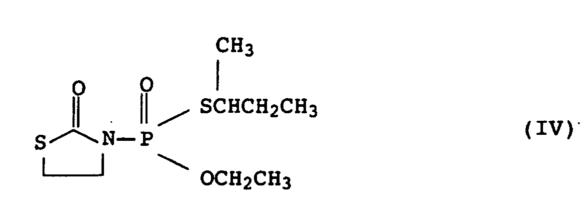 and/or
e) S-tert-butylthiomethyl O,O-diethyl phosphorodithioate of the formula 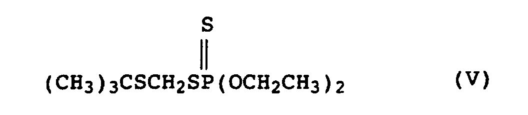 and/or
f) S,S-di-sec-butyl O-ethyl phosphorodithioate of the formula 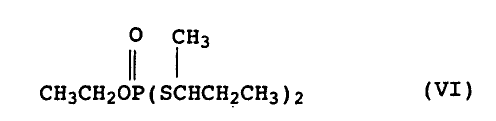 and/or
g) (RS)-O-1-(4-chlorophenyl)pyrazol-4-yl O-ethyl S-propyl phosphorothioate of the formula 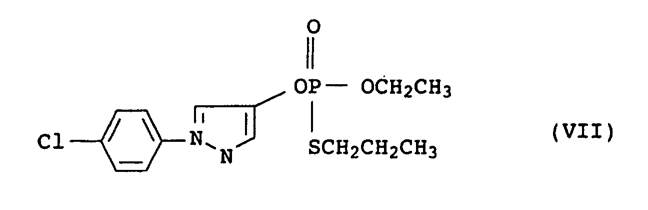 in a synergistically active amount.

2. A pesticide as claimed in claim 1, which contains from 0.1 to 99% by weight of active ingredient combination.

3. A pesticide as claimed in claim 1, wherein the weight ratio of the compound of the formula I to one or more of the compounds of the formulae II to VII is from 1,000:1 to 0.1:1.

4. A method of controlling pests, which comprises treating the pests and/or the areas and/or spaces to be kept free from pests with a pest-active amount of the compound of the formula I as claimed in claim 1 and one or more of the compounds of the formulae II to VII as claimed in claim 1.

5. A method of soil disinfection, which comprises treating the soil with an active amount of the compound of the formula I as claimed in claim 1 and one or more of the compounds of the formulae II to VII as claimed in claim 1.

6. A method of controlling nematodes, harmful soil fungi, soil insects, phytotoxic soil bacteria and germinating plants, which comprises treating the ground with an active amount of the compound of the formula I as claimed in claim 1 and one or more of the compounds of the formulae II to VII as claimed in claim 1.

7. The use of active ingredient combinations as set forth in claim 1 for controlling pests.

8. The use of the active ingredient combination as set forth in claim 1 for soil disinfection.

9. The use of the active ingredient combination as set forth in claim 1 for the control of nematodes, harmful soil fungi, soil insects, phytotoxic soil bacteria and germinating plants.

10. The use of the compound I as set forth in claim 1 for preparing pesticides as claimed in claim 1.

11. The use of one or more of the compounds II to VII for preparing pesticides as claimed in claim 1.

12. A pesticide comprising the active ingredient combination as set forth in claim 1 in addition to customary carriers.

## Revendications

1. Produit parasiticide, contenant une combinaison de substances actives consistant en
a) la tétrahydro-3,5-diméthyl-1,3,5-thiadiazine-2-thione de formule 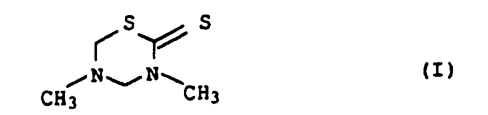 et
b) l'O-(O-éthyl-S-n-propylphosphoryl)-O-(N-méthylcarbomoyl) pyrocatéchol de formule 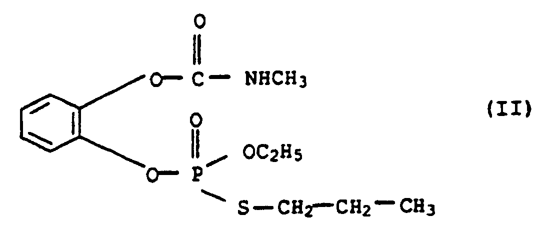 et/ou
c) le phosphorodithioate d'O-éthyle et de S,S-dipropyle, de formule 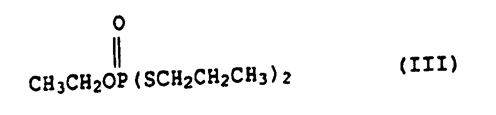 et/ou
d) le (RS)phosphonothioate de S-sec-butyle et d'O-éthyl-2-oxo-1,3-thiazolidin-3-yle de formule 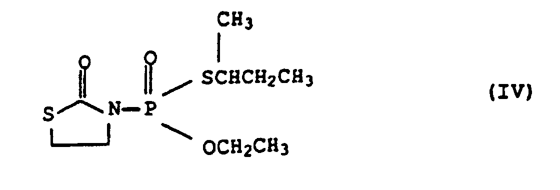
e) le phosphorodithioate de S-tert-sec-thiométhyle et d'O,O-éthyle de formule 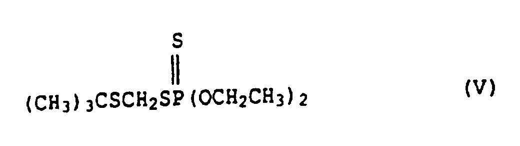 et/ou
f) le phosphorodithioate de S,S-di-sec-butyle et d'O-éthyle de formule 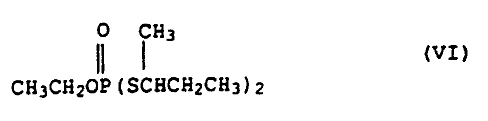 et/ou
g) le (RS)-phosphorothioate d'O-1-(4-chlorophényl)pyrazol-4-yle, d'O-éthyle et de S-propyle de formule 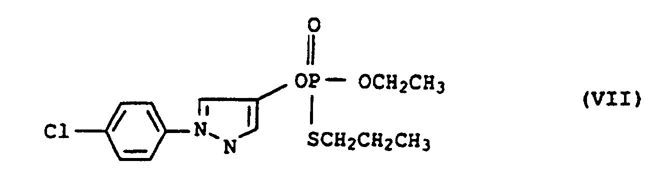 en quantité synergétique efficace.

2. Produit parasiticide selon la revendication 1, **caractérisé par le fait qu'**il contient de 0,1 à 99 % en poids de la combinaison de substances actives.

3. Produit parasiticide selon la revendication 1, **caractérisé par le fait que** les proportions relatives en poids entre le composé de formule I et un ou plusieurs des composé de formules II à VII vont de 1000 : 1 à 0,1 : 1.

4. Procédé pour combattre les parasites, **caractérisé par le fait que** l'on traite les parasites et/ou les aires et/ou locaux à protéger contre les parasites par une quantité parasiticide efficace du composé de formule I selon la revendication 1 et d'un ou plusieurs des composés de formules II à VII selon la revendication 1.

5. Procédé pour la désinfection du sol, **caractérisé par le fait que** l'on traite ce sol par une quantité efficace du composé de formule I selon la revendication 1 et d'un ou plusieurs des composés de formules II à VII selon la revendication 1.

6. Procédé pour combattre les nématodes, les mycètes nuisibles du sol, les insectes du sol, les bactéries du sol nuisibles pour les végétaux et les végétaux qui germent, **caractérisé par le fait que** l'on traite le sol par une quantité efficace du composé de formule I selon la revendication 1 et d'un ou plusieurs des composés de formules II à VII selon la revendication 1.

7. Utilisation de la combinaison de substances actives selon la revendication 1, pour la lutte contre les parasites.

8. Utilisation de la combinaison de substances actives selon la revendication 1 pour la désinfection du sol.

9. Utilisation de la combinaison de substances actives selon la revendication 1 pour la lutte contre les nématodes, les mycètes nuisibles du sol, les insectes du sol, les bactéries du sol nuisibles pour les végétaux et les végétaux qui germent.

10. Utilisation du composé I selon la revendication 1 pour la préparation des produits parasiticides selon la revendication 1.

11. Utilisation d'un ou plusieurs des composés II à VII pour la préparation des produits parasiticides selon la revendication 1.

12. Produit parasiticide contenant la combinaison de substances actives selon la revendication 1 avec des véhicules usuels.
